# EUROPEAN PATENT SPECIFICATION

(11) **EP 1 429 057 B1**
(45) Date of publication and mention of the grant of the patent: **26.09.2007**
(21) Application number: 02293079.6
(22) Date of filing: 12.12.2002
(51) Int. Cl.: F16J 15/08

(54) **Sealing gasket for an exhaust flange**
Dichtung für Abgas- Flansch
Joint d'étanchéité pour bride d'échappement

(43) Date of publication of application: 16.06.2004
(73) Proprietor: RENAULT s.a.s., 92100 Boulogne Billancourt (FR); Federal-Mogul Sealing Systems GmbH, 57562 Herdorf (DE)
(72) Inventor: Thillier, Nicolas, 78000 Versailles (FR); Stapel, Klaus, 57072 Siegen (DE)
(74) Representative: Davies, Owen Robert Treharne

(56) References cited:
- EP-A- 1 036 853
- US-A- 5 524 906
- US-B1- 6 491 769

## Description

The present invention relates to a sealing gasket for an exhaust flange.

The present invention applies to any type of flange connection in the exhaust system

The example used to describe the invention is that of a manifold/downtake flange coupling with a thin drawn flange on the downtake side.

The coupling between the exhaust manifold of an engine and the exhaust downtake is formed overall by three members: a flange on the engine side, a sealing gasket and a flange on the line side.

Two types of flange are currently used: two-point and three-point flanges. All these flanges have a plane bearing surface.

In the present description, the flange on the manifold side is thick, making it non-deformable in practice.

On the downtake side, the flange is drawn from thin sheet. More precisely, this exhaust flange comprises a collar area bounding an opening for the passage of the exhaust gases, an area forming a gasket support surrounding the collar area, and means for clamping the flange comprising at least two drilled holes in the clamping areas and making it possible for the flange to be clamped by bolts or the like against a counter-flange following the interposition of a sealing gasket, the flange being formed from thin steel sheet of a thickness of 2 to 3.5 mm. The clamping areas are plane.

For this type of coupling, conventional sealing gaskets are inappropriate. At ambient temperature, conventional sealing gaskets (see e.g. US-A-5524906) have elastic properties that are sufficient to maintain leak-tightness, but lose their elastic properties after heating at high temperature. Consequently, when the thin flange is deformed under the action of external moments, the joint is no longer adequately flush with the flange leading to a loss of leak-tightness.

The object of the present invention is to propose a new sealing gasket for an exhaust flange which mitigates the drawbacks of the prior art and offers a higher degree of leak-tightness.

This object is achieved by a sealing gasket for a thin exhaust flange of a thickness comprising at least one layer of metal sheet drilled with at least one opening, each through opening being bordered by a peripheral rib, characterised in that each layer has a thickness of between 0.1 and 0.5 mm and is formed from previously cold-rolled stainless steel whose percentage weight contents are 0.035 to 0.039 of C, 0.4 to 0.5 of Si, 1.4 to 1.6 of Mn, 10.5 to 12.5 of Ni, 16 to 17 of Cr, 2 to 3 of Mo and 0.36 to 0.5 of Ti, the gasket being adapted for use at temperatures of more than 500°C.

The invention is set out in the following description made with reference to the accompanying drawings, in which:
Fig. 1 is a top view of a thin drawn flange adapted to be used with the gasket of the invention;
Fig. 2 is a view in vertical section, showing an assembly of a flange of Fig. 1 and a manifold flange assembled with the interposition of the sealing gasket of the invention.

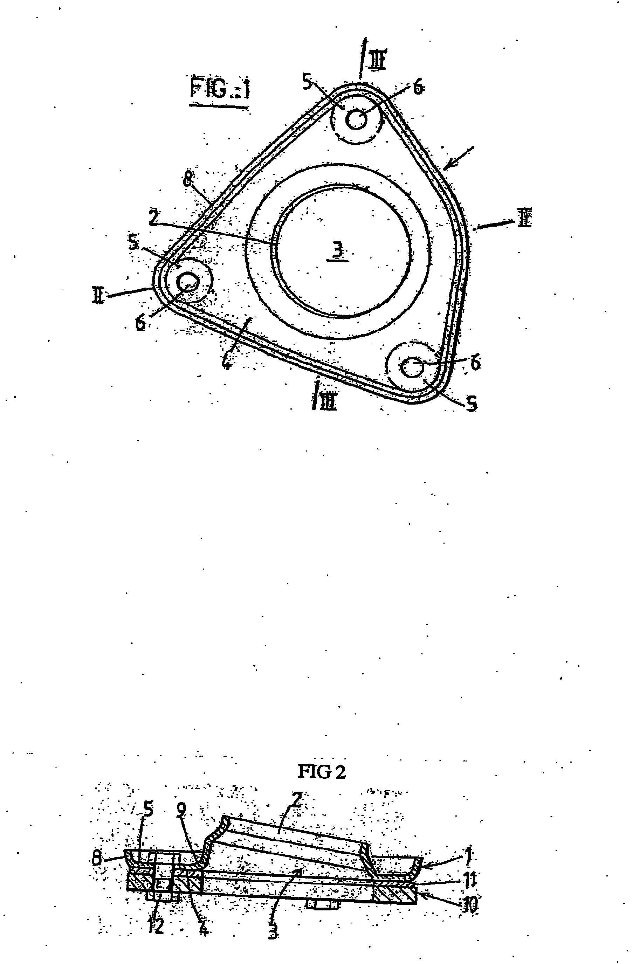

Fig. 1 shows a thin drawn flange 1 having, in plan view, a general rounded triangular shape and comprising a collar 2, disposed obliquely and bounding an opening 3 for the passage of the gases, a main member 4 forming a gasket support surrounding the collar 2, and three clamping areas 5 each comprising a drilled hole 6. The main member 4 is plane and has a upward facing rim 8 adapted to make the member rigid.

Fig. 2 shows an assembly of a thin drawn flange 1 with a manifold flange 10, with the interposition of a sealing gasket 11, the thin drawn flange 1 and the manifold flange 10 being clamped against one another, by bolts 12 inserted in their drilled holes after these holes have been aligned.

As explained above, sealing gaskets of the prior art are inappropriate for this type of flange.

According to the prior art, gaskets are currently produced from one or a plurality of cold-rolled stainless steel strips of European grade 1.4310 with the designation X10CrNi18.8. This material is in the basic austenitics group. However, the applicants have noted that the elastic limit of this material cold-rolled to the state C1150 according to the standard classification EN 10088-2 falls by some 40% from 1040Mpa to 680Mpa after heating at 650°C for one hour.

The applicants have noted that, in order to satisfy leak-tightness conditions, the material used to produce the strip(s) adapted to form the gasket should have an elastic limit of more than 800Mpa and a degradation of the value of its elastic limit, after heating for more than one hour at a temperature of more than 500°C, of less than 14%.

The applicants have observed surprisingly that a previously cold-rolled stainless steel whose percentage weight contents are 0.035 to 0.039 of C, 0.4 to 0.5 of Si, 1.4 to 1.6 of Mn, 10.5 to 12.5 of Ni, 16 to 17 of Cr, 2 to 3 of Mo and 0.36 to 0.5 of Ti satisfies these conditions.

According to a variant of the invention, the gasket 11 is formed from at least one layer of metal sheet or strip of a thickness of between 0.1 and 0.5 mm. The gasket further comprises at least one opening 110 for the passage of the exhaust gases. The opening is bordered by a peripheral rib.

The applicants have noted that the stainless steel of European grade 1.4571 with the designation X6CrNiMoTi17-12-2, cold-rolled to the state C1300 according to the standard classification EN 10088-2 satisfies these conditions. This material is in the group of austenitics with increased resistance to intergranular corrosion. The percentage weight contents of this stainless steel are 0.035 of C, 0.484 of Si, 1.584 of Mn, 10.595 of Ni, 16.79 of Cr, 2.04 of Mo, 0.364 of Ti, 0.11 of Cu, 0.001 of S and 0.024 of P.

In a known manner, this material is normally used without cold rolling for sheathing of flues, tubes for chemistry or even flexible tubes. This material has never been used in the cold-rolled state for applications of the sealing gasket type.

In the cold-rolled state C1300 according to the standard classification EN 10088-2, the modulus of elasticity of steel No. 1.4571 is some 1200Mpa and this value falls by only approximately 12% after heating at 650°C for 10 hours, reaching 1050Mpa.

The values of the modulus of elasticity are obtained in accordance with the standard ISO 6892.

The sealing gasket of the invention may then be used at temperatures of between 500 and 800°C.

It will be appreciated that the embodiment as described and illustrated has been given only by way of non-limiting example. The gasket could therefore be made from a single layer of sheet. Similarly, the rib may be a half-rib.

Although the gasket of the invention has been described with reference to a thin flange with three clamping areas, the gasket of the invention also applies to any kind of exhaust flange, in particular thick flanges and/or flanges comprising two clamping areas.

## Claims

1. A sealing gasket (11) for a thin exhaust flange (1) of a thickness comprising at least one layer of metal sheet drilled with at least one opening, each through opening being bordered by a peripheral rib, **characterised in that** each layer has a thickness of between 0.1 and 0.5 mm and is formed from previously cold-rolled stainless whose percentage weight contents are 0.035 to 0.039 of C, 0.4 to 0.5 of Si, 1.4 to 1.6 of Mn, 10.5 to 12.5 of Ni, 16 to 17 of Cr, 2 to 3 of Mo and 0.36 to 0.5 of Ti, the gasket being adapted for use at temperatures of more than 500°C.

2. A gasket (1) as claimed in claim 1, **characterised in that** the steel has percentage weight contents of 0.035 of C, 0.484 of Si, 1.584 of Mn, 10.595 of Ni, 16.79 of Cr, 2.04 of Mo, 0.364 of Ti, 0.11 of Cu, 0.001 of S and 0.024 of P, with a tensile strength of more than 1300N/mm².

3. A gasket (1) as claimed in claim 1 or 2, **characterised in that** the gasket is adapted for use at temperatures of between 550 and 800°C.

4. A gasket (1) as claimed in one of claims 1 to 3, **characterised in that** the gasket comprises a single layer.

5. A gasket (1) as claimed in one of claims 1 to 3, **characterised in that** the rib is a half-rib.

6. A sealing gasket as claimed in claims 1 to 5, **characterised in that** the state of cold rolling corresponds to the standard classification C1300 according to EN 10088-2.

## Patentansprüche

1. Dichtung (11) für einen dünnen Auspuff-Flansch (1) mit einer Dicke, die mindestens eine Blechlage, in der mindestens eine Öffnung gebohrt ist, umfasst, wobei jede Durchgangsöffnung durch eine Umfangsrippe begrenzt wird, **dadurch gekennzeichnet, dass** jede Lage eine Dicke zwischen 0,1 und 0,5 mm aufweist und aus vorher kaltgewalztem rostfreiem Stahl gebildet ist, der in Gewichtsprozent 0,035 bis 0,039 C, 0,4 bis 0,5 Si, 1,4 bis 1,6 Mn, 10,5 bis 12,5 Ni, 16 bis 17 Cr, 2 bis 3 Mo und 0,36 bis 0,5 Ti enthält, wobei die Dichtung zur Verwendung bei Temperaturen von über 500°C ausgeführt ist.

2. Dichtung (11) nach Anspruch 1, **dadurch gekennzeichnet, dass** der Stahl in Gewichtsprozent 0,035 C, 0,484 Si, 1,584 Mn, 10,595 Ni, 16,79 Cr, 2,04 Mo, 0,364 Ti, 0,11 Cu, 0,001 S und 0,024 P bei einer Zugfestigkeit von über 1300 N/mm² enthält.

3. Dichtung (11) nach Anspruch 1 oder 2, **dadurch gekennzeichnet, dass** die Dichtung zur Verwendung bei Temperaturen zwischen 550 und 800 °C ausgeführt ist.

4. Dichtung (11) nach einem der Ansprüche 1 bis 3, **dadurch gekennzeichnet, dass** die Dichtung eine einzige Lage umfasst.

5. Dichtung (11) nach einem der Ansprüche 1 bis 3, **dadurch gekennzeichnet, dass** die Rippe eine Halbrippe ist.

6. Dichtung nach einem der Ansprüche 1 bis 5, **dadurch gekennzeichnet, dass** der Zustand des Kaltwalzens der Normklassifizierung C1300 gemäß EN 10088-2 entspricht.

## Revendications

1. Garniture d'étanchéité (11) pour une bride d'échappement mince (1) dont l'épaisseur comprend au moins une couche de feuille de métal percée d'au moins une ouverture, chaque ouverture traversante étant bordée par une nervure périphérique, **caractérisée en ce que** ce que chaque couche a une épaisseur comprise entre 0,1 et 0,5 mm et est fabriquée en acier inoxydable préalablement laminé à froid, dont les teneurs (pourcentages en poids) sont de 0,035 à 0,039 de C, 0,4 à 0,5 de Si, 1,4 à 1,6 de Mn, 10,5 à 12,5 de Ni, 16 à 17 de Cr, 2 à 3 de Mo et 0,36 à 0,5 de Ti, la garniture étant conçue pour un usage à des températures dépassant les 500 °C.

2. Garniture (11) selon la revendication 1, **caractérisée en ce que** l'acier a des teneurs (pourcentages en poids) de 0,035 de C, 0,484 de Si, 1,584 de Mn, 10,595 de Ni, 16,79 de Cr, 2,04 de Mo, 0,364 de Ti, 0,11 de Cu, 0,001 de S et 0,024 de P, avec une résistance à la traction de plus de 1300 N/mm².

3. Garniture (11) selon la revendication 1 ou 2, **caractérisée en ce que** la garniture est conçue pour un usage à des températures comprises entre 550 °C et 800 °C.

4. Garniture (11) selon l'une quelconque des revendications 1 à 3, **caractérisée en ce que** la garniture ne comprend qu'une seule couche.

5. Garniture (11) selon l'une quelconque des revendications 1 à 3, **caractérisée en ce que** la nervure est une demi-nervure.

6. Garniture d'étanchéité selon les revendications 1 à 5, **caractérisée en ce que** l'état de laminage à froid correspond à la classification C1300 de la norme EN 10088-2.
